# EUROPÄISCHE PATENTSCHRIFT

(11) **EP 1 254 011 B1**
(45) Veröffentlichungstag und Bekanntmachung des Hinweises auf die Patenterteilung: **17.03.2004**
(21) Anmeldenummer: 00990606.6
(22) Anmeldetag: 20.11.2000
(51) Int. Cl.: B29C 47/92

(54) **PUFFERSPEICHER FÜR POLYMERSCHMELZEN, INSBESONDERE CELLULOSELÖSUNGEN**
BUFFER STORE FOR POLYMER MELTS, ESPECIALLY CELLULOSE SOLUTIONS
RESERVOIR TAMPON DESTINE A UN POLYMERE FONDU, NOTAMMENT DES SOLUTIONS DE CELLULOSE

(30) Priorität: 08.02.2000 DE 10005466
(43) Veröffentlichungstag der Anmeldung: 06.11.2002
(73) Patentinhaber: Zimmer AG, 60388 Frankfurt (DE)
(72) Erfinder: ZIKELI, Stefan, A-4844 Regau (AT); LONGIN, Michael, A-4860 Lenzing (AT); ECKER, Friedrich, A-4850 Timelkam (AT)
(74) Vertreter: Grünecker, Kinkeldey, Stockmair & Schwanhäusser Anwaltssozietät
(86) Internationale Anmeldenummer: PCT/EP2000/011524
(87) Internationale Veröffentlichungsnummer: WO 2001/058666

(56) Entgegenhaltungen:
- DE-A- 1 914 909
- FR-A- 2 570 323
- US-A- 5 826 978

## Beschreibung

Die Erfindung betrifft einen Pufferspeicher zur im wesentlichen konstanten Versorgung einer Extrusionsvorrichtung mit einer Polymerschmelze, mit zumindest einer Polymerschmelzeneintrittsöffnung, mit zumindest einer Polymerschmelzenaustrittsöffnung und mit zumindest einer zwischen Polymerschmelzeneintrittsöffnung und Polymerschmelzenaustrittsöffnung angeordneten, von der Polymerschmelze durchströmten Ausgleichskammer, deren Volumen in Abhängigkeit von einem in der Polymerschmelze herrschenden Druck änderbar ist.

Derartige Pufferspeicher werden allgemein bei Extrusionsvorrichtungen eingesetzt, die möglichst unter konstantem Druck mit einer meist hochviskosen Polymerschmelze versorgt werden müssen. Eine spezielle Verwendung derartiger Pufferspeicher für Extrusionsvorrichtungen findet sich in der Textilindustrie im Bereich der Spinnanlagen und Spinnmaschinen, wo die Polymerschmelze eine Spinnlösung aus Cellulose, Aminoxiden - beispielsweise N-Methylmorpholin-N-oxid (NMMO) - und Wasser ist. Durch die Spinnmaschinen wird die Spinnlösung zu Fäden versponnen. Andere Einsatzgebiete des Pufferspeichers finden sich bei Blasumformmaschinen und bei Tiefzieh- und Spritzgußmaschinen.

Bei Spinnmaschinen hängt die Qualität der Fäden wesentlich von einer konstanten Zufuhr der Polymerschmelze an die Spinnmaschine ab. Um die konstante Beschickung der Spinnmaschine mit Polymerschmelze zu gewährleisten, werden Pufferspeicher eingesetzt, die Volumenstrom- und Druckschwankungen in der Zuleitung der Polymerschmelze abfangen, indem sich das Volumen einer Ausgleichskammer im Pufferspeicher in Abhängigkeit von einer Volumenstrom- und/oder Druckschwankung in der Polymerschmelze ändert.

Der Einsatz eines Pufferspeichers schafft jedoch neue Probleme. Die mechanischen und chemischen Eigenschaften der Polymerschmelzen, wie beispielsweise einer Celluloselösung, sind zeitabhängig und ändern sich je nach der Verweildauer der Polymerschmelze im Pufferspeicher und in der Zuleitung an die Spinnmaschine. Um eine gleichbleibende Spinnqualität zu erzielen, muß daher gewährleistet sein, dass möglichst alle Bereiche des Pufferspeichers gleichmäßig schnell von der Polymerschmelze durchströmt werden.

Probleme entstehen dadurch, dass die Polymerlösung ein hochviskoses Fluid ist und mit relativ geringen Strömungsgeschwindigkeiten durch den Pufferspeicher strömt. Aufgrund der niedrigen Strömungsgeschwindigkeit und der hohen Viskosität ist die Strömung der Polymerschmelze durch den Pufferspeicher überwiegend laminar.

Die laminare Strömung ist vor allem in Anbetracht der Zeitabhängigkeit der Materialeigenschaften kritisch: Zum einen fällt die Strömungsgeschwindigkeit in einer laminaren Strömung in der Nähe von Wänden stark ab; zum anderen ist eine laminare Strömung stark ablösegefährdet. Tritt eine Strömungsablösung im Pufferspeicher auf, so bilden sich Totwassergebiete oder Rezirkulationsgebiete. Diese beiden Problemkreise - ungleichmäßige Geschwindigkeitsverteilung und Strömungsablösung - führen zu einer unterschiedlichen Verweildauer der Polymerschmelze im Pufferspeicher. Als Folge sind die chemischen und mechanischen Eigenschaften der "gealterten" Polymerschmelze, welche die Bereiche des Pufferspeichers mit langsamer Strömungsgeschwindigkeit durchströmt und daher länger im Pufferspeicher verbleibt, gegenüber der Polymerschmelze verändert, die schnell durch den Pufferspeicher strömt.

Die Ablösegebiete der Polymerschmelzenströmung werden von Zeit zu Zeit durch die bei der Förderung der Polymerschmelze stets vorkommenden Geschwindigkeitsschwankungen und aufgrund ihrer instationären Eigenschaften zumindest teilweise ausgespült. Die dort einige Zeit eingefangene und "gealterte" Polymerschmelze gelangt so letztendlich an die Spinnmaschine und wird dort versponnen, wodurch Qualität der versponnenen Fäden stark schwankt.

Eine Maßnahme zur Vergleichmäßigung der Durchströmung des Pufferspeichers besteht laut WO 94/02408 im Einbau von Rührwerken, um die Strömung aktiv durch den Pufferspeicher zu transportieren und zu vermischen. Durch die Vermischung wird das Geschwindigkeitsprofil der Durchströmung vergleichmäßigt und Totwasser- und Rezirkulationsgegebiete werden vermieden. Allerdings verbraucht der Antrieb der Rührwerke nicht zuletzt wegen der hohen Viskosität der Polymerschmelze viel Energie. Bei ungenauer Auslegung des Rührwerks besteht Gefahr, dass sich die Polymerschmelze erwärmt. Ohne aufwendige Gegenmaßnahmen würden sich in diesem Fall die chemischen und mechanischen Eigenschaften der Polymerschmelze unter dem Wärmeeinfluß ändern.

Die FR 2570323 betrifft eine Einrichtung, um ein niedrigviskoses Elastormer mit einem vorbestimmten, konstanten Durchsatz abzugeben. Der Durchsatz soll auch dann erreicht werden, wenn die Versorgung mit dem Elastormer kurz unterbrochen ist. Die Vorrichtung soll vor allem für die Herstellung von Verbindungen von Merhfachverglasungen verwendet werden. Bei der Vorrichtung der FR 2570323 wird das Elastormer in einem Speicher mit variablen Volumen eingelagert, wobei im Inneren des Speichers ein vorgespannter Zylinder mit einem Kolben angeordnet ist. In Hubrichtung des kolbens reicht ein Kanal hindurch durch den das niedrigviskose Elastormer durch den Speicher geleitet ist. Am Ausgang des Reservoirs befindet sich eine Pumpe mit zwei Kompressionsvorrichtungen.

In der WO 96/05338 ist ein Pufferspeicher gezeigt, der von der Polymerschmelze axial durchströmt ist. Hinter der Polymerschmelzeneintrittsöffnung erweitert sich die Ausgleichskammer diffusorförmig. Zur Polymerschmeizenaustrittsöffnung hin verjüngt sich die Ausgleichöffnung düsenartig. Das zwischen dem Diffusorabschnitt und dem Düsenabschnitt gelegene Volumen kann sich je nach erforderlichem Füllstand in der Polymerschmelze vergrößern oder verkleinern.

Die Polymerschmelzenströmung durch den Diffusor und die Düse ist stark ablösegefährdet. Daher sind beim Pufferspeicher der WO 96/05338 zur Vergleichmäßigung der Durchströmung und zur Vermeidung der Ablösung kommerziell verfügbare Statikmischerelemente in die Ausgleichskammer eingebaut. Die Statikmischerelemente erstrecken sich über den gesamten Querschnitt der Ausgleichskammer.

Das Volumen der Ausgleichskammer muss jedoch erheblich vergrößert werden, damit die Statikmischerelemente dort aufgenommen werden können. Daher kann der Pufferspeicher mit Statikmischern für viele Anwendungen zu groß geraten. Aufgrund des langen Strömungswegs und der großen Abmessungen der Statikmischerelemente erhöht sich außerdem der Strömungswiderstand des Pufferspeichers um ein Vielfaches, so dass der Energieverbrauch zur Förderung der Polymerschmelze. Damit steigt auch die Gefahr der

Der Nachteil des Pufferspeichers der WO 96/05338 liegt darin, dass die Strömung im Bereich des Diffusors und der Düse zum Ablösen neigt, wenn der Öffnungswinkel jeweils von Diffusor und Düse zu groß wird. Diese Gefahr besteht gerade bei der langsamen Strömung der hochviskosen Polymerschmelze. In der abgelösten Strömung kommt es zur Bildung eines Ablösewirbels und zu Totwassergebieten, in denen die hochviskose Polymerschmelze stagniert. Außerdem ist für verschiedene Durchströmungsverhältnisse bei verschiedenen Anlagen stets eine neue Auslegung und Berechnung des Öffnungswinkel notwendig, da die Ablösung von der Geschwindigkeit der Durchströmung abhängt.

Der Erfindung liegt in Anbetracht dieser Nachteile die Aufgabe zugrunde, einen strömungsmechanisch günstigeren Pufferspeicher zu schaffen und Maßnahmen für eine gleichmäßige Durchströmung des Pufferspeichers zu treffen, welche die Baugröße und den Strömungswiderstand des Pufferspeichers nicht oder nur unwesentlich verändern.

Diese Aufgabe wird erfindungsgemäß für einen Pufferspeicher der eingangs genannten Art dadurch gelöst, dass die Ausgleichskammer zwischen der Polymerschmelzeneintrittsöffnung und der Polymerschmelzenaustrittsöffnung in zumindest zwei, sich in Durchströmungsrichtung erstreckende Teilkammem aufgespalten ist.

Diese Lösung ist einfach und hat den Vorteil, dass auf eine diffusorartige Erweiterung und eine düsenartige Verengung des Strömungsquerschnittes verzichtet werden kann: Durch die Aufspaltung der Ausgleichskammern in zumindest zwei Teilkammern kann der Strömungsquerschnitt der Teilkammern klein bleiben, so dass gegenüber der Polymerschmelzeneintrittsöffnung und der Polymerschmelzenaustrittsöffnung kein großer Querschnittssprung mehr notwendig ist. Folglich ist bei der erfindungsgemäßen Ausgestaltung des Pufferspeichers die Neigung zur Bildung von Ablösegebieten gegenüber dem Stand der Technik deutlich verringert. Der von beiden Teilkammern gebildete Gesamtströmungsquerschnitt ist dennoch relativ groß, so dass der Strömungswiderstand des Pufferspeichers gering ist. Die Baugröße des Pufferspeichers kann unverändert beibehalten werden.

Gemäß einer weiteren vorteilhaften Ausgestaltung wird der Querschnittssprung dann besonders klein, wenn in einem normalen Betriebszustand des Pufferspeichers der Strömungsquerschnitt jeder Teilkammer im wesentlichen dem Strömungsquerschnitt der Polymerschmelzeneintrittsöffnung und/oder der Polymerschmelzenaustrittsöffnung entspricht. Der Pufferspeicher befindet sich dabei dann in seinem normalen Betrieb, wenn die Polymerschmelze störungsfrei an die Spinnmaschine zugeführt wird und das Volumen der Ausgleichkammer im wesentlichen dem über eine lange Betriebsdauer gemittelten Volumen der Ausgleichskammer entspricht. Um diesen Mittelwert herum ändert sich das Volumen der Ausgleichkammer bei Druckanstieg oder -abfall sowie bei Volumenstromschwankungen der Polymerschmelze.

Zur Änderung des Volumens der Ausgleichskammer kann eine Wand der Ausgleichskammer zumindest abschnittsweise von einem Kolben gebildet sein. Dieser Kolben ist im Pufferspeicher beweglich, durch seine Bewegung ist das Volumen der Ausgleichskammer änderbar. In einer weiteren vorteilhaften Ausgestaltung kann auf der der Ausgleichskammer abgewandten Seite des Kolbens eine fluidgefüllte - d.h. eine gas- oder flüssigkeitsgefüllte - Kolbenkammer mit einer Fluidzuleitung und einer Fluidableitung vorgesehen sein. Diese Kolbenkammer kann mit einem einstellbaren Druck beaufschlagbar sein, über den sich der Druck in der Ausgleichskammer, d.h. der in der Polymerschmelze herrschende Druck, oder das Volumen der Ausgleichskammer verändem lässt. Über die Fluidableitung kann bei einem Druck- oder Volumenstromanstieg in der Polymerschmelze und einer damit verbundenen Vergrößerung des Volumens der Ausgleichskammer die Luft aus der Kolbenkammer abgeleitet werden. Über die Fluidzuleitung wird Luft bei einer Verringerung des Volumens der Ausgleichskammer in die Kolbenkammer zugeleitet.

Alternativ oder zusätzlich zum fluidgefüllten Kolbenraum kann ein mechanisches Federelement vorgesehen sein, durch das eine auf den Kolben wirkende Federkraft erzeugt wird.

Der Kolben kann einer weiteren Ausgestaltung mit einem Wegaufnehmer verbunden sein, durch den ein Signal ausgebbar ist. Durch das Signal ist das Volumen der Ausgleichskammer berechenbar. Dieses Signal kann einer Datenverarbeitungsanlage zugeführt sein, um eine Spinnmaschinenanlage zu überwachen, von der der Pufferspeicher einen Teil bildet.

In einer weiteren vorteilhaften Ausgestaltung kann die Ausgleichskammer als Ringraum, der Kolben entsprechend als Ringkolben ausgebildet sein.

Bei der Ausgestaltung der Ausgleichskammer als Ringraum ist es von Vorteil, wenn die Polymerschmelzeneintrittsöffnung und die Polymerschmelzenaustrittsöffnung an diametral gegenüberliegenden Bereichen des Ringraumes angeordnet sind. Die ringförmige Ausgleichskammer verzweigt sich somit in zwei gleich lange Teilkammern, die somit eine gleich lange Durchströmungsdauer unabhängig davon gewährleisten, durch welche Teilkammer die Polymerschmelze strömt.

In einer weiteren vorteilhaften Ausgestaltung können die Polymerschmelzeneintrittsöffnung und/oder die Polymerschmelzenaustrittsöffnung in axialer Richtung, d.h. in Richtung einer Symmetrieachse des Ringraumes, in den Ringraum münden. Bei dieser Ausgestaltung ist der Pufferspeicher einfach in ein bestehendes Leitungssystem zu integrieren. Diese Ausgestaltung ist des weiteren insbesondere in Verbindung mit einem Kolben vorteilhaft, wenn die Polymerschmelzeneintrittsöffnung und/oder die Polymerschmelzenaustrittsöffnung in der Ausgleichskammer gegenüber dem Kolben angeordnet sind: Selbst bei dem kleinsten Volumen in der Ausgleichskammer können die Polymerschmelzeneintrittsöffnung und/oder die Polymerschmelzenaustrittsöffnung nicht durch den im Pufferspeicher verfahrbaren Kolben abgedeckt werden.

Der Ein- und Ausbau des Pufferspeichers in ein bestehendes Rohrsystem ist einfach, wenn gemäß einer weiteren vorteilhaften Ausgestaltung die Polymerschmelzeneintrittsöffnung und die Polymerschmelzenaustrittsöffnung auf der selben Seite des Ringraums angeordnet sind. Bei dieser Ausgestaltung sind die Anschlüsse des Pufferspeichers an einer Seite gelegen und daher leicht zugänglich.

Die der Erfindung zugrunde liegende Aufgabe wird für einen Pufferspeicher der eingangs genannten Art erfindungsgemäß auch dadurch gelöst, dass die Ausgfeichskammer mit zumindest einem in die Strömung der Polymerschmelze ragenden Strömungsleitelement zur Strömungsoptimierung versehen ist, das kleiner als der Strömungsquerschnitt der Ausgleichskammer ist und durch das zumindest bereichsweise das Geschwindigkeitsprofil in Durchströmungsrichtung der Ausgleichskammer vergleichmäßigt ist. Beim Einsatz von Strömungsleitelementen kann eine Aufspaltung der Ausgleichskammer in Teilkammern auch entfallen.

Bei dieser Ausgestaltung ermöglicht das Strömungsleitelement eine gezielte Beeinflussung von kritischen Bereichen der Strömung im Pufferspeicher, also denjenigen Gebieten, in denen Ablösungen auftreten oder in denen das Geschwindigkeitsprofil über den Strömungsquerschnitt sehr ungleichmäßig ist, also große Geschwindigkeitsunterschiede aufweist.

Für die gezielte Beeinflussung eines kritischen Strömungsbereiches innerhalb der Ausgleichskammer wird nur ein kleines Strömungsleitelement benötigt, dessen Baugröße der Fachmann durch einfache Experimente angepaßt an den jeweiligen Einzelfall bestimmen kann: Ausgehend von einer bestimmten Größe des Strömungsleitelements, bei der eine Vergleichmäßigung der Durchströmung in einem ausgewählten kritischen Bereich sicher erreicht und ein Auftreten der ungleichmäßigen Geschwindigkeitsverteilung oder der Ablösung sicher vermieden wird, wird das Strömungsleitelement sukzessive verkleinert. Bei jeder neuen Baugröße des Strömungsleitelements wird - numerisch oder experimentell - ermittelt, ob der gewünschte strömungsoptimierende Effekt noch erzielt wird. Die minimale Größe des Strömungsleitelements ist diejenige Baugröße, bei der eine Strömungsoptimierung - also eine Vergleichmäßigung der Durchströmung und ein Vermeiden von Ablösungs- und Rezirkulationsgebieten in dem ausgewählten kritischen Bereich - gerade noch auftritt. Die sich durch diese Versuchsreihe ergebenden Baugrößen für das Strömungsleitelement sind überraschend klein und führen zu keiner nennenswerten Behinderung der Kernströmung durch die Ausgleichskammer, da sie nur einen geringen Teil des Strömungsquerschnittes einnehmen.

Im Gegensatz zu den Statikmischern aus dem Stand der Technik, die die Ausgleichskammer vollständig ausfüllen und auf die gesamte Durchströmung des Pufferspeichers einwirken, findet also erfindungsgemäß nur eine lokal begrenzte Strömungsbeeinflussung statt. Das zu dieser lokalen Strömungsbeeinflussung und Strömungsoptimierung notwendige Strömungsleitelement ist gegenüber den Statikmischem recht klein ausgebildet. Damit bleibt beim Einsatz der erfindungsgemäßen Strömungsleitelemente die Baugröße des Pufferspeichers im wesentlichen unverändert.

Der durch die Vermeidung der Rezirkulationsgebiete und Totwassergebiete erzielte Rückgewinn an Strömungsverlusten liegt in der Größenordnung des Strömungswiderstands des Strömungsleitelements, so dass sich der Strömungswiderstand des Pufferspeichers nicht erhöht. Unter Umständen ist sogar eine Verringerung des Strömungswiderstandes des Pufferspeichers möglich.

Im Bereich der Ablösung, in den Rezirkulationsgebieten und Totwassergebieten fällt die Geschwindigkeit gegenüber der Kemströmung der Polymerschmelze durch die Ausgleichskammer stark ab und kann sogar negative Werte annehmen. Lokal tritt dann eine Strömung entgegengesetzt zur Durchströmung des Pufferspeichers, eine sogenannte Rückströmung auf.

Gemäß einer besonders vorteilhaften Ausgestaltung der Erfindung kann das Strömungsleitelement in der Umgebung eines Bereichs der Ausgleichskammer angeordnet sein, in dem eine Ablösung oder ein starker Geschwindigkeitsabfall in der Polymerschmelzenströmung auftritt. Diese Bereiche sind ohne in die Ausgleichskammer eingebautem Strömungsleitelement experimentell oder numerisch vom Fachmann ohne weiteres zu erkennen. Wird das Strömungsleitelement in der Ausgleichskammer plaziert, so bewirkt es in diesen Bereichen gezielt eine Strömungsoptimierung.

Besonders in Bereichen, in denen die Stromlinien, also der Verlauf der Durchströmung der Ausgleichskammer eine starke Krümmung aufweist, besteht bei einer laminaren Strömung die Gefahr von Ablösung und der Bildung von großen Wirbeln. Daher kann in einer weiteren vorteilhaften Ausgestaltung vorgesehen sein, das Strömungsleitelement in einem Bereich der Ausgleichskammer anzuordnen, in dem die Durchströmung der Ausgleichskammer eine starke Krümmung aufweist. Die Strömungsleitelemente können als separate Teile, die in der Ausgleichskammer befestigt werden, oder an den Wänden der Ausgleichskammer als Teil eines Gehäuses oder Kolbens des Pufferspeichers einstückig ausgebildet sein.

Andere, für eine gleichmäßige Durchströmung der Ausgleichskammer problematische Strömungsverhältnisse können sich ergeben, wenn die Ausgleichskammer einen Strömungsquerschnitt aufweist, der zumindest eine Ecke ausbildet. In einer derartigen Ecke kann sich bei der Durchströmung der Ausgleichskammer eine verzögerte Eckenströmung ausbilden. Um die Eckenströmung zu beschleunigen und so eine zu lange Verweildauer der Polymerschmelze in den Ecken zu vermeiden, kann in einer weiteren vorteilhaften Ausgestaltung das Strömungsleitelement im Bereich der Ecke angeordnet sein. Bei dieser Anordnung wird die sich bei der Durchströmung der Ausgleichskammer ausbildende Eckenströmung durch das Strömungsleitelement vergleichmäßigt ist. Dies kann beispielsweise dadurch geschehen, dass die Ecken mit einem Strömungsleitelement versehen sind, das die Ecken der Ausgleichskammer strömungsgünstig abrundet.

Die Bereiche, in denen die Polymerschmelze in die Ausgfeichskammer einströmt und aus der Ausgleichskammer ausströmt, können insbesondere dann zu einer ungleichmäßigen Strömung führen, wenn die Polymerschmelzeneintrittsöffnung und die Polymerschmelzenaustrittsöffnung in Richtung der Symmetrieachse des Ringraumes angeordnet sind. Dann wird eine direkt gegenüber der Polymerschmelzeneintrittsöffnung liegende Wand der Ausgleichskemmer durch die in die Ausgleichskammer strömende Polymerschmelze direkt angeströmt, was zu einem ungleichmäßigen Geschwindigkeitsprofil im Bereich der Polymerschmelzeneintrittsöffnung führt. Im Bereich der Ausströmung aus der Ausgleichskammer treffen die Strömungen aus den beiden Teilkammern aufeinander und müssen umgeleitet werden. Um in diesen Fällen die Strömung zu optimieren, kann gemäß einer weiteren vorteilhaften Ausgestaltung das Strömungsleitelement auf der der Polymerschmelzeneintrittsöffnung und/oder der Polymerschmelzenaustrittsöffnung gegenüberliegenden Wand der Ausgleichskammer angeordnet sein.

Dabei kann das Strömungsleitelement im wesentlichen die Form einer in Richtung der Polymerschmelzeneintrittsöffnung weisenden, vorzugsweise radialsymmetrischen Nase aufweisen. Durch diese Nase wird die Strömung von der Polymerschmelzeneintrittsöffnung in die Ausgleichskammer strömungsgünstig geteilt und in Richtung der Ausgleichskammer geleitet, ohne dass eine Ablösung der Strömung der Polymerschmelze und eine Rezirkulation eintritt.

Alternativ oder zusätzlich zu dieser Ausgestaltung kann in einer weiteren vorteilhaften Ausgestaltung das Strömungsleitelement im wesentlichen die Form einer in Richtung der Polymerschmelzenaustrittsöffnung weisenden, vorzugsweise radialsymmetrischen, Nase aufweisen. Bei dieser Ausgestaltung wird die Ausströmung aus der Ausgleichskammer ebenfalls allmählich und ohne die Bildung von Totwassergebieten und Rezirkulationsgebieten in Richtung der Polymerschmelzenaustrittsöffnung geleitet.

Dabei kann in einer Weiterbildung des erfindungsgemäßen Pufferspeichers die Nase am Kolben angeordnet sein.

Das Strömungsleitelement kann in einer weiteren vorteilhaften Ausgestaltung die Form einer Schaufel oder eines Flügels ausbilden. Auch diese Ausgestaltungen eines Strömungsleitelements können gezielt die Strömung durch den Pufferspeicher in kritischen Bereichen beeinflussen. Das Strömungsleitelement kann beispielsweise als Leitschaufel ausgebildet sein. Eine solche Leitschaufel leitet die schnelle Kernströmung in langsam strömende Gebiete oder erzeugt in ihrem Nachlauf eine Wirbel, der die Strömung durchmischt und vergleichmäßigt.

Die Erfindung betrifft auch einen Bausatz für eine Extrusionsanlage, der aus einer Extrusionsmaschine zum Extrudieren der Polymerschmelze und aus zumindest einer Pumpeneinrichtung zur Förderung der Polymerschmelze zur Extrusionsmaschine besteht.

Die eingangs erwähnte Aufgabe wird bei einem solchen Bausatz durch einen Pufferspeicher nach einer der oben genannten, vorteilhaften Ausgestaltungen gelöst.

Insbesondere kann die Extrusionsmaschine eine Spinnmaschine zum Verspinnen der Polymerlösung sein. In diesem Fall kann die Polymerschmelze eine Spinnlösung, insbesondere eine Celluloselösung mit NMMO, sein.

Um eine Vergleichmäßigung der Zufuhr der Polymerschmelze an die zumindest eine Pumpeinrichtung zu gewährleisten, ist es dabei von Vorteil, wenn der Pufferspeicher in Förderrichtung der Polymerschmelze vor dieser zumindest einen Pumpeinrichtung angeordnet ist.

Im folgenden wird der Aufbau und die Funktion des erfindungsgemäßen Pufferspeichers anhand zweier Ausführungsbeispiele erläutert.

Es zeigen:
- Fig. 1: ein erstes Ausführungsbeispiel eines erfindungsgemäßen Pufferspeichers in einem ersten Radialschnitt;
- Fig. 2: das Ausführungsbeispiel der Fig. 1 in einem zweiten Radialschnitt senkrecht zum Radialschnitt der Fig. 1;
- Fig. 3: ein zweites Ausführungsbeispiel des erfindungsgemäßen Pufferspeichers in einem Radialschnitt;
- Fig. 4: das Ausführungsbeispiel der Fig. 3 in einem zweiten Radialschnitt senkrecht zum Radialschnitt der Fig. 3.

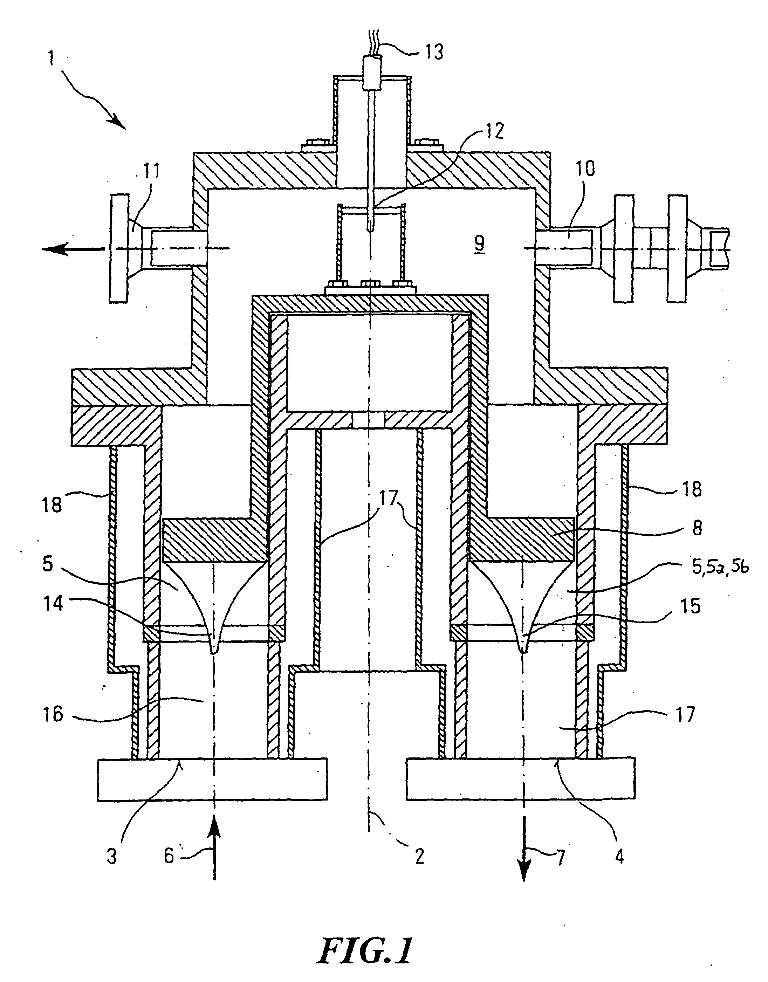

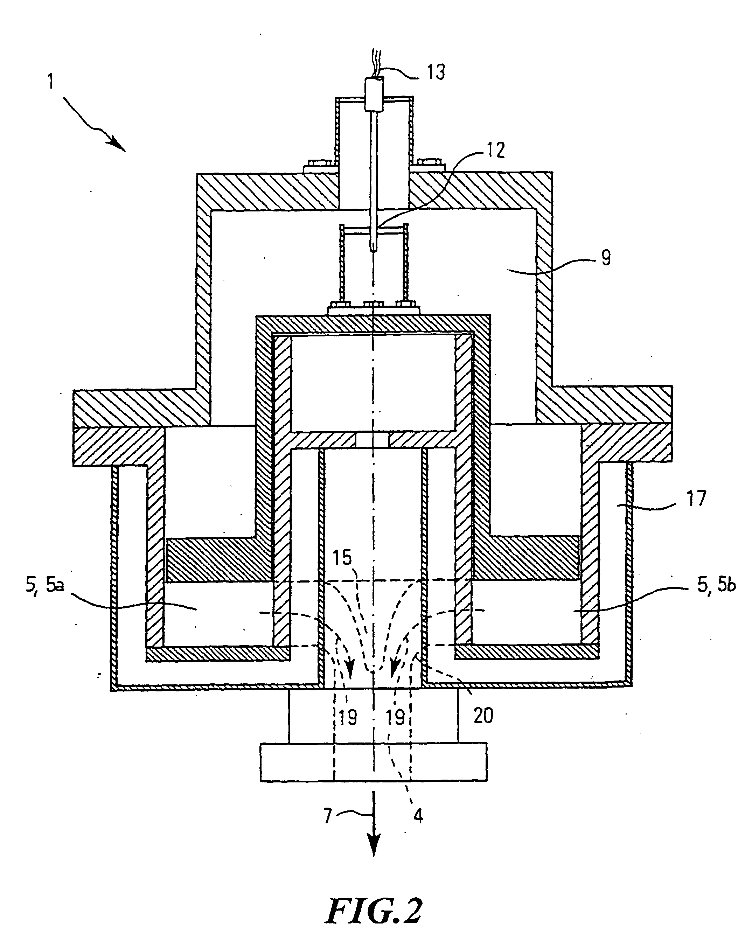

Zunächst wird der Aufbau des Ausführungsbeispiels der Fig. 1 und 2 beschrieben.

Fig. 1 zeigt einen Pufferspeicher 1, der im wesentlichen rotationssymmetrisch um eine Längsachse 2 ausgebildet ist. Der Schnitt der Fig. 1 geht diametral durch die Polymerschmelzeneintrittsöffnung 3 und die Polymerschmelzenaustrittsöffnung 4. Die Polymerschmelzeneintrittsöffnung 3 und die Polymerschmelzenaustrittsöffnung 4 sind einander diametral gegenüberliegend auf einer Seite einer ringförmigen Ausgleichskammer 5 angeordnet. Im Ausführungsbeispiel der Fig. 1 verlaufen die Längsachsen der Polymerschmelzeneintrittsöffnung 3 und der Polymerschmelzenaustrittsöffnung 4 parallel zur Längsachse 2. Polymerschmelzeneintrittsöffnung 3 und Polymerschmelzenaustrittsöffnung 4 münden folglich senkrecht in die Ausgleichskammer 5.

Hinter der Polymerschmelzeneintrittsöffnung spaltet sich die Ausgleichskammer 5 in Strömungsrichtung in zwei Teilkammern 5a und 5b auf. Die Teilkammern 5a und 5b erstrecken sich in Strömungsrichtung der Polymerschmelze durch die Ausgleichskammer. Im Ausführungsbeispiel sind zwei kreissegmentartig gebogene Teilkammern 5a, 5b vorhanden, die zusammen einen durchgängigen Ringraum 5 bilden. Der Querschnitt jeder Teilkammer 5a, 5b im normalen Betriebszustand des Pufferspeichers entspricht in etwa dem Querschnitt der Polymerschmelzeneintrittsöffnung 3 und der Polymerschmelzenaustrittsöffnung 4. Durch die in etwa gleichen Querschnitte von jeweils Polymerschmelzeneintrittsöffnung 3 und Polymerschmelzenaustrittsöffnung 4 und jeder Teilkammer 5a, 5b werden Querschnittssprünge vermieden, die zu einer Ablösung der Polymerschmelzenströmung führen können. Gleichzeitig ist der gesamte Strömungsquerschnitt der beiden Teilkammem 5a, 5b so groß, dass die Polymerschmelze langsam durch den Pufferspeicher 1 strömt. Durch die niedrigen Strömungsgeschwindigkeiten und die hohe Viskosität der Polymerschmelze wird eine laminare und konstant gleichmäßige Durchströmung des Pufferspeichers 1 erhalten, was den Strömungswiderstand des Pufferspeichers senkt.

Durch die Polymerschmelzeneintrittsöffnung 3 tritt eine hochviskose Polymerschmelze, vorzugsweise aus Cellulose, Wasser und Aminoxid, in Pfeilrichtung 6 die Ausgleichskammer 5 ein. Durch die Polymerschmelzenaustrittsöffnung 4 tritt die Polymerschmelze nach Durchströmen der Ausgleichskammer 5 in Pfeilrichtung 7 aus. Der Pufferspeicher 1 ist des weiteren mit einem Ringkolben 8 versehen, der in Richtung der Längsachse 2 verschieblich im Pufferspeicher 1 gehalten ist. Das Volumen der Ausgleichskammer 5 läßt sich in Abhängigkeit von der Lage des Ringkolbens 8 verändern.

Die Fig. 1 zeigt den Pufferspeicher 1 im normalen Betriebszustand, in dem der Pufferspeicher 1 normalerweise betrieben wird, und um den herum sich das Volumen der Ausgleichskammer 5 ändert.

Auf der der Ausgleichskammer 5 abgewandten Seite des Ringkolbens 8 ist der Pufferspeicher 1 mit einem abgedichteten Kolbenraum 9 versehen. Der Kolbenraum 9 ist mit einer Fluidzuleitung 10 und einer Fluidableitung 11 versehen, durch die ein Fluid, also ein Gas oder eine Flüssigkeit, je nach Stellung des Ringkolbens 8 zugeleitet oder abgeleitet werden kann. Die Kolbenkammer 9 kann über die Zuleitung 10 und die Ableitung 11 auch mit einem vorbestimmten Druck beaufschlagt werden, der dann auf die Polymerschmelze in der Ausgleichskammer 5 wirkt. Anstelle der Ausgestaltung mit Kolbenkammer 9 und Zu- und Ableitung 10, 11 kann auch ein mechanisches Federelement vorgesehen sein, das auf den Kolben 8 wirkt.

Des weiteren ist der Ringkolben 8 mit einem Wegaufnehmer 12 versehen, durch den die momentane Lage des Ringkolbens 8 erfaßbar und über eine Signalleitung 13 in Signalform an eine Datenverarbeitungsanlage (nicht gezeigt) weiterleitbar ist. In der Datenverarbeitungsanlage kann durch das Signal des Wegaufnehmers 12 das derzeitige Volumen der Ausgleichskammer 5 bestimmt bzw. berechnet werden.

Des weiteren ist der Pufferspeicher 1 mit einem nicht gezeigten Druckaufnahmeelement, durch das der im Kolbenraum 9 herrschende Druck erfassbar und in Signalform ausgebbar ist. Außerdem ist im Pufferspeicher ein ebenfalls nicht gezeigter Temperaturmesser vorgesehen, durch den die Temperatur der Polymerschmelze und/oder die Temperatur im Kolbenraum 9 erfassbar ist.

Im Bereich der Polymerschmelzeneintrittsöffnung 3 ist der Pufferspeicher mit einem Strömungsleitelement 14 versehen. Das Strömungsleitelement 14 ist in Form einer sich in Richtung der Längsachse 2 erstreckenden, zur Polymerschmelzeneintrittsöffnung 3 gerichteten und sich in dieser Richtung verjüngenden Nase ausgebildet. Eine ebensolche Nase 15 befindet sich bei der Polymerschmelzenaustrittsöffnung 4. Die Nase 15 ist ebenfalls in Richtung der Längsachse 2 zur Polymerschmelzenaustrittsöffnung 4 zulaufend ausgestaltet. Die beiden Strömungsleitelemente 14, 15 sind koaxial zu den Achsen 16, 17 der Polymerschmelzeneintrittsöffnung 3 und Polymerschmelzenaustrittsöffnung 4 angeordnet und besitzen senkrecht zu diesen Achsen 15, 16 jeweils kreisförmige Querschnitte.

Zur Temperaturstabilisierung der sich im Pufferspeicher 1 befindlichen Polymerschmelze ist ein Heizmantel 18 vorgesehen, der die Ausgleichskammer innen und außen umgibt. Der Heizmantel 18 wird von einem Fluid mit einer vorbestimmten, einstellbaren und geregelten Temperatur durchströmt.

Fig. 2 zeigt das Ausführungsbeispiel der Fig. 1 in einem Radialschnitt senkrecht zum Radialschnitt der Fig. 1 mit Blick auf die flanschförmig ausgebildete Polymerschmelzenaustrittsöffnung 4.

Anhand der Fig. 1 und der Fig. 2 wird im folgenden die Funktion der erfindungsgemäßen Strömungsleitelemente 14, 15 erläutert.

Im Übergangsbereich von der Polymerschmelzeneintrittsöffnung 3 und der Polymerschmelzenaustrittsöffnung 4 zur Ausgleichskammer 5 strömt die Polymerschmelze senkrecht in die Ausgleichskammer 5 und muß umgelenkt werden. Um in diesen Übergangsbereichen die Strömung der Polymerschmelze möglichst verlustfrei und ohne die Bildung von Totwassergebieten umzuleiten und um die Strömung zu vergleichmäßigen, ist in diesen Bereichen, wie oben erläutert, jeweils ein Strömungsleitelement 14, 15 in Form einer Nase vorgesehen. Durch die Nase 14 wird die Strömung ohne Erzeugung eines Totwassergebietes oder einer Rückströmung in Richtung der Ausgleichskammer 5 geleitet.

Ebenso wird im Bereich der Polymerschmelzenaustrittsöffnung 4 die Strömung der Polymerschmelze durch die Nase 15 ohne Bildung von verlustbehafteten Wirbeln und ohne Erzeugung einer Rückströmung oder eines Totwassergebietes 5 gleichmäßig in die Polymerschmelzenaustrittsöffnung 4 geleitet. Dies ist in der Fig. 2 schematisch durch die Pfeile 19 dargestellt.

Die Form der Strömungsleitelemente 14, 15 kann dabei in Abhängigkeit von der jeweiligen Geometrie der Ausgleichskammer und der Eintritts- und Austrittsöffnung, vom jeweiligen Volumenstrom und von der jeweiligen Viskosität der Polymerschmelze durch einfache experimentelle Tests, wie Strömungssichtbarmachungen, bei denen die Verwirbelung und die Totwassergebiete sichtbar gemacht werden, oder durch Rechenprogramme optimiert werden. Hierzu können auch die Kanten 20 zwischen der Ausgleichskammer 5 und der Polymerschmelzeneintrittsöffnung 3 bzw. der Polymerschmelzeneintrittsöffnung 4 abgerundet sein. So wird eine Ablösung der Polymerschmelzenströmung an den Kanten 20 vermieden.

Die Strömungsleitelemente 14, 15 stellen gegenüber dem Strömungsquerschnitt der Ausgleichskammer 5 kleine Einbauten dar, die die Durchströmung der Ausgleichskammer 5 nur im Bereich der Polymerschmelzeneintrittsöffnung 3 bzw. Polymerschmelzenaustrittsöffnung 4 beeinflussen und die Kernströmung durch die Ausgleichskammer 5 nicht behindern. Sie führen zu einer erheblichen Vergleichmäßigung des Geschwindigkeitsprofils der Durchströmung und zu einer Absenkung der durch Wirbel erzeugten Strömungsverluste.

Durch die Vermeidung von Totwassergebieten und Rückström- bzw. Rezirkulationsgebieten wird durch die Strömungsleitelemente 14, 15 eine Durchströmung der Ausgleichskammer 5 mit nahezu gleichbleibender Verweildauer der Polymerschmelze im Pufferspeicher 1 erreicht. Durch die kleine Bauform der Strömungsleitelemente 14, 15 wird darüber hinaus der von ihnen erzeugte Strömungswiderstand durch den Rückgewinn der Strömungsverluste ausgeglichen. Die Strömungsleitelemente 14, 15 sind so klein, dass sie ohne weitere Umbaumaßnahmen in bereits bestehende Pufferspeicher 1 eingebaut werden können.

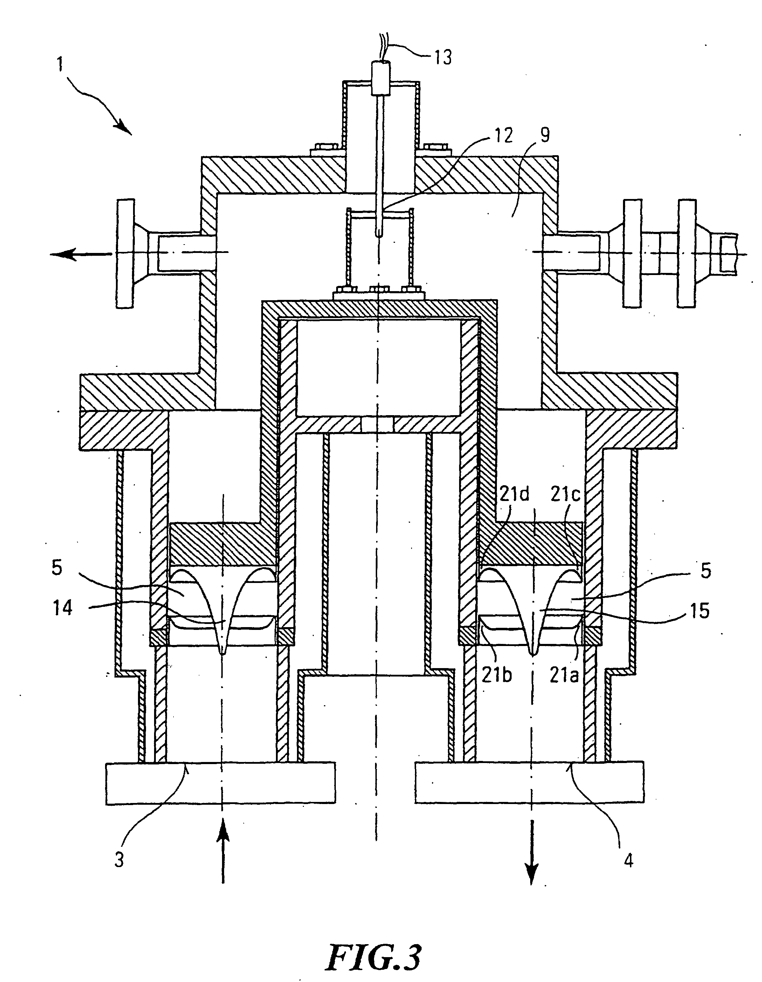

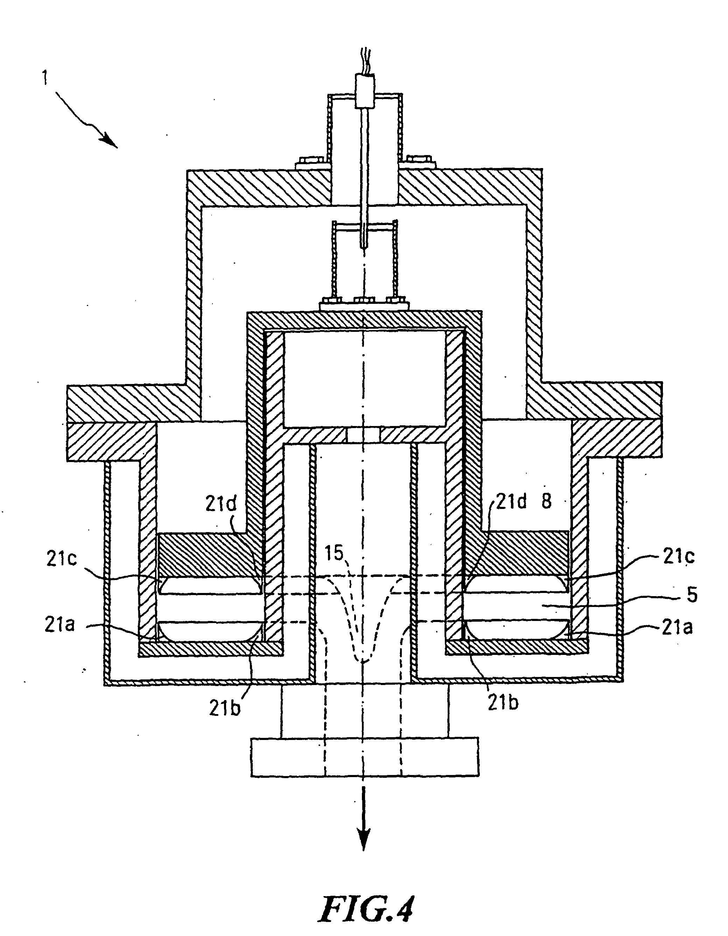

Ein weiteres Ausführungsbeispiel eines erfindungsgemäßen Pufferspeichers mit strömungsoptimierenden Strömüngsleitelementen ist in den Fig. 3 und 4 in denselben Schnittdarstellungen. wie in den Fig. 1 und 2 dargestellt. Für gleiche oder ähnliche Bauelemente werden dieselben Bezugszeichen wie bei den Fig. 1 und 2 verwendet.

Das Ausführungsbeispiel der Fig. 3 und 4 unterscheidet sich vom Ausführungsbeispiel der Fig. 1 und 2 im wesentlichen durch zusätzliche Strömungsleitelemente in den Ecken der Ausgleichskammer. Durch diese Strömungsleitelemente soll die Ausbildung einer Eckenströmung vermieden werden. In den Ecken ist die Durchströmung der Ausgleichskammer 5 stark verzögert. Folglich besteht die Gefahr, dass die Polymerschmelze in den Ecken altert.

Zur Beeinflussung der Eckenströmung sind grundsätzlich verschiedene Maßnahmen möglich, beispielsweise kann durch schaufel- oder flügelförmige Strömungsleitelemente schnelle Strömung aus der Kernströmung durch die Ausgleichskammer 5 in Richtung der Ecken geleitet werden. Auch diese Maßnahmen sind nach dem Wissen der Erfinder im Stand der Technik bei Pufferspeichern unbekannt.

Beim Ausführungsbeispiel der Fig. 3 und 4 wird jedoch ein anderer Weg beschritten: Wie in Fig. 4 zu erkennen ist, ist in jeder Ecke des rechteckigen Strömungsquerschnittes der Ausgleichskammer 5 ein die Ecke auffüllendes, abgerundetes Strömungsleitelement 21a, 21b, 21c und 21d angeordnet. Diese den Ecken des Strömungsquerschnittes zugeordneten Strömungsleitelemente verhindern das Entstehen einer langsamen Eckenströmung. Der Krümmungsradius der Strömungsleitelemente kann leicht experimentell oder numerisch bestimmt werden, indem eine Strömungssichtbarmachung oder eine Widerstandsmessung durchgeführt werden.

Die Strömungsleitelemente 21a-d erstrecken sich jeweils in Umfangsrichtung des Ringraums ringförmig in der entsprechenden Ecke. Die beiden oberen Strömungsleitelemente 21c und 21c sind am Kolben 8 befestigt und bewegen sich mit diesen je nach Volumen der Ausgleichskammer 5 auf und ab. Die Strömungsleitelemente 21a-d können auch in bestehende Pufferspeicher nachträglich eingebracht werden.

Im Bereich der Polymerschmelzeneintrittsöffnung 3 und der Polymerschmelzenaustrittsöffnung 4 wirken die Strömungsleitelemente 21a-d vorzugsweise mit den dort angebrachten Nasen 14 und 15 zusammen, indem sie nahtlos am inneren Rand und äußeren Rand in die Nasen 14, 15 übergehen, wie dies in Fig. 3 dargestellt ist. Die Strömungsleitelemente 14, 15 haben dabei die gleiche Wirkung wie beim Ausführungsbeispiel der Fig. 1 und 2. Auf ihre Funktion muß daher beim zweiten Ausführungsbeispiel nicht nochmals eingegangen werden.

Auch beim Ausführungsbeispiel der Fig. 3 und 4 sind die Strömungsleitelemente 21a-d klein gegenüber dem Strömungsquerschnitt der Ausgleichskammer 5. Ihr Strömungswiderstand liegt in der Größenordnung der Rückgewinnung der Strömungsverluste der Eckenströmung. Somit erhöhen sie die Strömungsverluste im Pufferspeicher 1 gar nicht oder nur unwesentlich und tragen auch nicht zu einer Vergrößerung der Baugröße des Pufferspeichers 1 bei.

Im Bereich der Polymerschmelzeneintrittsöffnung 3 und der Polymerschmelzenaustrittsöffnung 4, wo die Strömung stark gekrümmt ist, kann, wie in der Fig. 4 dargestellt, ein glatter Übergang der jeweils unteren Strömungsleitelemente 21a und 21b zur Polymerschmelzeneintrittsöffnung 3 bzw. Polymerschmelzenaustrittsöffnung 4 ausgeformt sein.

## Patentansprüche

1. Pufferspeicher zur im wesentlichen konstanten Versorgung einer Extrusionsvorrichtung, insbesondere einer Spinnmaschine, mit einer Polymerschmelze, insbesondere einers Cellulose-Lösung, mit zumindest einer Polymerschmelzeneintrittsöffnung, mit zumindest einer Polymerschmelzenaustrittsöffnung und mit zumindest einer zwischen Polymerschmelzeneintrittsöffnung und Polymerschmelzenaustrittsöffnung angeordneten, von der Polymerschmelze durchströmten Ausgleichskammer, deren Volumen änderbar ist, **dadurch gekennzeichnet, dass** die Ausgleichskammer (5) zwischen der Polymerschmelzeneintrittsöffnung (3) und der Polymerschmelzenaustrittsöffnung (4) in zumindest zwei, sich in Durchströmungsrichtung erstreckende Teilkammern (5a, 5b) aufgespalten ist.

2. Pufferspeicher nach Anspruch 1, **dadurch gekennzeichnet, dass** in einem normalen Betriebszustand des Pufferspeichers (1) der Strömungsquerschnitt jeder Teilkammer (5a, 5b) im wesentlichen dem Strömungsquerschnitt der Polymerschmelzeneintrittsöffnung (3) und/oder der Polymerschmelzenaustrittsöffnung (4) entspricht.

3. Pufferspeicher nach Anspruch 1 oder 2, **dadurch gekennzeichnet, dass** die Teilkammern (5a, 5b) im wesentliche gleiche Strömungsquerschnitte aufweisen.

4. Pufferspeicher nach einem der oben genannten Ansprüche, **dadurch gekennzeichnet, dass** die Teilkammern (5a, 5b) sich im wesentlichen von der Polymerschmelzeneintrittsöffnung (3) bis im wesentlichen zur Polymerschmelzenaustrittsöffnung (4) erstrecken.

5. Pufferspeicher nach einem der oben genannten Ansprüche, **dadurch gekennzeichnet, dass** eine Wand der Ausgleichskammer (5) zumindest abschnittsweise von einem im Pufferspeicher (1) beweglichen Kolben (8) gebildet ist.

6. Pufferspeicher nach Anspruch 5, **dadurch gekennzeichnet, dass** auf der der Ausgleichskammer (5) abgewandten Seite des Kolbens (8) eine fluidgefüllte Kolbenkammer (9) mit einer Fluidzuleitung (10) und einer Fluidableitung (11) vorgesehen ist, wobei die Kolbenkammer (9) mit einem einstellbaren Druck beaufschlagbar ist.

7. Pufferspeicher nach Anspruch 5 oder 6, **dadurch gekennzeichnet, dass** der Kolben mit einem Wegaufnehmer (12) verbunden ist, durch den ein Signal ausgebbar ist, durch das das Volumen der Ausgleichskammer (5) berechenbar ist.

8. Pufferspeicher nach Anspruch 5, **dadurch gekennzeichnet, dass** der Kolben (8) mit einer von einem mechanischen Federelement erzeugten Federkraft beaufschlagt ist.

9. Pufferspeicher nach einem der oben genannten Ansprüche, **dadurch gekennzeichnet, dass** die Ausgleichskammer (5) als Ringraum ausgebildet ist.

10. Pufferspeicher nach Anspruch 9, **dadurch gekennzeichnet, dass** der Kolben (8) als Ringkolben ausgebildet ist.

11. Pufferspeicher nach Anspruch 9 oder 10, **dadurch gekennzeichnet, dass** die Polymerschmelzeneintrittsöffnung (3) und die Polymerschmelzenaustrittsöffnung (4) an diametral gegenüberliegenden Bereichen des Ringraumes angeordnet sind.

12. Pufferspeicher nach einem der oben genannten Ansprüche, **dadurch gekennzeichnet, dass** die Polymerschmelze durch die Polymerschmelzeneintrittsöffnung (3) und/oder die Polymerschmelzenaustrittsöffnung (4) im wesentlichen in Richtung einer Symmetrieachse (2) der Ausgleichskammer (5) in die Ausgleichskammer (5) geleitet ist.

13. Pufferspeicher nach einem der oben genannten Ansprüche, **dadurch gekennzeichnet, dass** die Polymerschmelzeneintrittsöffnung (3) und/oder die Polymerschmelzenaustrittsöffnung (4) in der Ausgleichskammer (5) gegenüber dem Kolben (8) angeordnet sind.

14. Pufferspeicher nach einem der oben genannten Ansprüche, **dadurch gekennzeichnet, dass** die Polymerschmelzeneintrittsöffnung (3) und die Polymerschmelzenaustrittsöffnung (4) auf der gleichen Seite der Ausgleichkammer (5) angeordnet sind.

15. Pufferspeicher, nach Anspruch 1, **dadurch gekennzeichnet, dass** die Ausgleichskammer (5) mit zumindest einem in die Strömung der Polymerschmelze ragenden Strömungsleitelement (14, 15, 21a-d) zur Strömungsoptimierung versehen ist, das kleiner als der Strömungsquerschnitt der Ausgleichskammer (5) ist und durch das zumindest bereichsweise das Geschwindigkeitsprofil in Durchströmungsrichtung der Ausgleichskammer (5) vergleichmäßigt ist, indem das Strömungsleitelement (14, 15, 21a-d) in einem Bereich der Ausgleichskammer (5) angeordnet ist, in dem ohne Strömungsleitelement (14, 15, 21a-d) ein Geschwindigkeitsabfall gegenüber der Kernströmung der Ausgleichskammer auftritt.

16. Pufferspeicher nach Anspruch 15, **dadurch gekennzeichnet, dass** durch das Strömungsleitelement (14, 15, 21a-d) die schnelle Kernströmung der Durchströmung der Ausgleichskammer (5) in Richtung eines Bereichs geleitet ist, in dem ohne Strömungsleitelement (14, 15, 21a-d) eine gegenüber der Kernströmung verlangsamte Strömung auftritt.

17. Pufferspeicher nach Anspruch 15 oder 16, **dadurch gekennzeichnet, dass** Strömungsleitelement (14, 15, 21a-d) in einem Bereich der Ausgleichskammer (5) angeordnet ist, in dem die Durchströmung der Ausgleichskammer (5) eine starke Krümmung aufweist.

18. Pufferspeicher nach einem der oben genannten Ansprüche, **dadurch gekennzeichnet, dass** die Ausgleichskammer (5) einen Strömungsquerschnitt aufweist, der zumindest eine Ecke ausbildet.

19. Pufferspeicher nach Anspruch18. **dadurch gekennzeichnet, dass** das Strömungsleitelement (14, 15, 21a-d) im Bereich der Ecke angeordnet ist und durch das Strömungsleitelement (14, 15, 21a-d) die sich bei der Durchströmung der Ausgleichskammer (5) ausbildende Eckenströmung vergleichmäßigt ist.

20. Pufferspeicher nach einem der oben genannten Ansprüche, **dadurch gekennzeichnet, dass** das Strömungsleitelement (14, 15, 21a-d) auf der der Polymerschmelzeneintrittsöffnung (3) und/oder der Polymerschmelzenaustrittsöffnung (4) gegenüberliegenden Wand der Ausgleichskammer (5) angeordnet ist.

21. Pufferspeicher nach Anspruch 20, **dadurch gekennzeichnet, dass** das Strömungsleitelement (14, 15) im wesentlichen die Form einer in Richtung der Strömungseintrittsöffnung (3) weisenden, vorzugsweise radialsymmetrischen Nase aufweist.

22. Pufferspeicher nach Anspruch 20 oder 21, **dadurch gekennzeichnet, dass** die Nase am Kolben (8) angeordnet ist.

23. Pufferspeicher nach einem der oben genannten Ansprüche, **dadurch gekennzeichnet, dass** das Strömungsleitelement im wesentlichen schaufel- oder flügelförmig ausgebildet ist.

24. Bausatz, bestehend aus einer Extrusionsmaschine zum Extrudieren einer Polymerschmelze, aus zumindest einer Pumpeneinrichtung zur Förderung der Polymerschmelze zur Extrusionsmaschine und einem Pufferspeicher, **dadurch gekennzeichnet, dass** der Pufferspeicher nach einem der oben genannten Ansprüche ausgebildet ist.

## Claims

1. A buffer store for supplying an extrusion device, in particular a spinning machine, with a polymer melt, in particular a cellulose solution, in a substantially constant manner, comprising at least one polymer melt inlet opening, at least one polymer melt outlet opening and at least one compensation chamber of variable volume that is arranged between the polymer melt inlet opening and the polymer outlet opening and has the polymer melt flowing therethrough, **characterized in that** the compensation chamber (5) between the polymer melt inlet opening (3) and the polymer melt outlet opening (4) is divided into at least two sectional chambers (5a, 5b) extending in the direction of flow.

2. The buffer store according to claim 1, **characterized in that** in a normal operative state of the buffer store (1) the flow cross-section of each sectional chamber (5a, 5b) corresponds substantially to the flow cross-section of the polymer melt inlet opening (3) and/or the polymer melt outlet opening (4).

3. The buffer store according to claim 1 or 2, **characterized in that** the sectional chambers (5a, 5b) have substantially identical flow cross-sections.

4. The buffer store according to any one of the aforementioned claims, **characterized in that** the sectional chambers (5a, 5b) extend essentially from the polymer melt inlet opening (3) substantially to the polymer melt outlet opening (4).

5. The buffer store according to any one of the aforementioned claims, **characterized in that** a wall of the compensation chamber (5) is formed at least sectionwise by a piston (8) being movable in the buffer store (1).

6. The buffer store according to claim 5, **characterized in that** at the side of the piston (8) facing away from the compensation chamber (5), a fluid-filled piston chamber (9) is provided with a fluid supply pipe (10) and a fluid drain pipe (11), the piston chamber (9) being applyable with an adjustable pressure.

7. The buffer store according to claim 5 or 6, **characterized in that** the piston is connected to a displacement sensor (12) by which a signal can be output for calculating the volume of the compensation chamber (5).

8. The buffer store according to claim 5, **characterized in that** the piston (8) is applied with a spring force produced by a mechanical spring element.

9. The buffer store according to any one of the aforementioned claims, **characterized in that** the compensation chamber (5) is designed as an annular chamber.

10. The buffer store according to claim 9, **characterized in that** the piston (8) is designed as an annular piston.

11. The buffer store according to claim 9 or 10, **characterized in that** the polymer melt inlet opening (3) and the polymer melt outlet opening (4) are arranged on diametrically opposite regions of the annular chamber.

12. The buffer store according to any one of the aforementioned claims, **characterized in that** the polymer melt is guided through the polymer melt inlet opening (3) and/or the polymer melt outlet opening (4) into the compensation chamber (5) substantially in the direction of an axis of symmetry (2) of the compensation chamber (5).

13. The buffer store according to any one of the aforementioned claims, **characterized in that** the polymer melt inlet opening (3) and/or the polymer melt outlet opening (4) is/are arranged in the compensation chamber (5) to be opposite to the piston (8).

14. The buffer store according to any one of the aforementioned claims, **characterized in that** the polymer melt inlet opening (3) and the polymer melt outlet opening (4) are arranged at the same side of the compensation chamber (5).

15. The buffer store according to claim 1, **characterized in that** the compensation chamber (5) is provided with at least one flow guiding element (14, 15, 21 a-d) for flow optimization projecting into the flow of the polymer melt, said element being smaller than the flow cross-section of the compensation chamber (5) and by which the velocity profile in the direction of flow through the compensation chamber (5) is made uniform at least in sections **in that** the flow guiding element (14, 15, 21 a-d) is arranged in a region of the compensation chamber (5) in which in the absence of a flow guiding element (14, 15, 21 a-d) a drop in velocity occurs relative to the core flow of the compensation chamber.

16. The buffer store according to claim 15, **characterized in that** the fast core flow of the flow through the compensation chamber (5) is guided by the flow guiding element (14, 15, 21a-d) towards a region in which in the absence of a flow guiding element (14, 15, 21 a-d) a flow is observed that is slowed down in comparison with the core flow.

17. The buffer store according to claim 15 or 16, **characterized in that** the flow guiding element (14, 15, 21 a-d) is arranged in a region of the compensation chamber (5) in which the flow through the compensation chamber (5) has a strong curvature.

18. The buffer store according to any one of the aforementioned claims, **characterized in that** the compensation chamber (5) has a flow cross-section which forms at least one corner.

19. The buffer store according to claim 18, **characterized in that** the flow guiding element (14, 15, 21a-d) is arranged in the region of the comer, and the corner flow formed during flow through the compensation chamber (5) is made uniform by the flow guiding element (14, 15, 21a-d).

20. The buffer store according to any one of the aforementioned claims, **characterized in that** the flow guiding element (14, 15, 21 a-d) is arranged on the wall of the compensation chamber (5) which is opposite to the polymer melt inlet opening (3) and/or the polymer melt outlet opening (4).

21. The buffer store according to claim 20, **characterized in that** the flow guiding element (14, 15, 21 a-d) has substantially the form of a preferably radially symmetrical nose oriented towards the flow inlet opening (3).

22. The buffer store according to claim 20 or 21, **characterized in that** the nose is arranged on the piston (8).

23. The buffer store according to any one of the aforementioned claims, **characterized in that** the flow guiding element is substantially designed in the form of a blade or wing.

24. A kit consisting of an extrusion machine for extruding a polymer melt, at least one pump means for conveying the polymer melt to the extrusion machine, and a buffer store, **characterized in that** the buffer store is designed according to one of the aforementioned claims.

## Revendications

1. Réservoir tampon pour l'alimentation essentiellement constante d'un dispositif d'extrusion, en particulier une machine de filature, en polymère fondu, en particulier en solution de cellulose, présentant au moins une ouverture d'entrée de polymère fondu, au moins une ouverture de sortie de polymère fondu et au moins une chambre d'équilibrage qui est disposée entre les deux, qui est traversée par l'écoulement de polymère fondu et dont le volume est variable, **caractérisé en ce que** la chambre d'équilibrage (5) prévue entre l'ouverture d'entrée de polymère fondu (3) et l'ouverture de sortie de polymère fondu (4) est divisée en au moins deux chambres partielles (5a, 5b) qui s'étendent dans la direction d'écoulement.

2. Réservoir tampon selon la revendication 1, **caractérisé en ce que** dans un état de fonctionnement normal du réservoir tampon (1), la section transversale d'écoulement de chaque chambre partielle (5a, 5b) correspond essentiellement à la section transversale d'écoulement de l'ouverture d'entrée de polymère fondu (3) et/ou de l'ouverture de sortie de polymère fondu (4).

3. Réservoir tampon selon la revendication 1 ou 2, **caractérisé en ce que** les chambres partielles (5a, 5b) présentent des sections transversales d'écoulement essentiellement identiques.

4. Réservoir tampon selon l'une des revendications précédentes, **caractérisé en ce que** les chambres partielles (5a, 5b) s'étendent essentiellement de l'ouverture d'entrée de polymère fondu (3) jusqu'à l'ouverture de sortie de polymère fondu (4).

5. Réservoir tampon selon l'une des revendications précédentes, **caractérisé en ce qu'**une paroi de la chambre d'équilibrage (5) est formée au moins partiellement par un piston (8) mobile dans le réservoir tampon (1).

6. Réservoir tampon selon la revendication 5, **caractérisé en ce qu'**il est prévu sur le côté du piston (8) opposé à la chambre d'équilibrage (5) une chambre de piston (9) remplie de fluide, avec une amenée de fluide (10) et une sortie de fluide (11), la chambre de piston (9) étant apte à être contrainte à l'aide d'une pression réglable.

7. Réservoir tampon selon la revendication 5 ou 6, **caractérisé en ce que** le piston est relié à un capteur de déplacement (12) grâce auquel un signal peut être émis et permet de calculer le volume de la chambre d'équilibrage (5).

8. Réservoir tampon selon la revendication 5, **caractérisé en ce que** le piston (8) est contraint à l'aide d'une force de ressort générée par un élément de ressort mécanique.

9. Réservoir tampon selon l'une des revendications précédentes, **caractérisé en ce que** la chambre d'équilibrage (5) est conçue comme un espace annulaire.

10. Réservoir tampon selon la revendication 9, **caractérisé en ce que** le piston (8) est conçu comme un piston annulaire.

11. Réservoir tampon selon la revendication 9 ou 10, **caractérisé en ce que** l'ouverture d'entrée de polymère fondu (3) et l'ouverture de sortie de polymère fondu (4) sont disposées dans des zones diamétralement opposées de l'espace annulaire.

12. Réservoir tampon selon l'une des revendications précédentes, **caractérisé en ce que** le polymère fondu traverse l'ouverture d'entrée de polymère fondu (3) et/ou l'ouverture de sortie de polymère fondu (4) essentiellement dans la direction d'un axe de symétrie (2) de la chambre d'équilibrage (5) pour entrer dans celle-ci.

13. Réservoir tampon selon l'une des revendications précédentes, **caractérisé en ce que** l'ouverture d'entrée de polymère fondu (3) et/ou l'ouverture de sortie de polymère fondu (4) sont disposées dans la chambre d'équilibrage (5) en face du piston (8).

14. Réservoir tampon selon l'une des revendications précédentes, **caractérisé en ce que** l'ouverture d'entrée de polymère fondu (3) et l'ouverture de sortie de polymère fondu (4) sont disposées sur le même côté de la chambre d'équilibrage (5).

15. Réservoir tampon selon la revendication 1, **caractérisé en ce que** la chambre d'équilibrage (5) est pourvue d'au moins un élément de guidage d'écoulement (14, 15, 21a-d) qui s'avance dans l'écoulement du polymère fondu, qui est destiné à optimiser l'écoulement, qui est plus petit que la section transversale d'écoulement de la chambre d'équilibrage (5) et grâce auquel, au moins partiellement, le profil de vitesse dans la direction d'écoulement à travers la chambre d'équilibrage (5) est égalisé, ledit élément de guidage d'écoulement (14, 15, 21a-d) étant disposé dans une zone de la chambre d'équilibrage (5) dans laquelle, sans élément de guidage d'écoulement (14, 15, 21a-d), une baisse de vitesse a lieu par rapport à l'écoulement central dans ladite chambre d'équilibrage.

16. Réservoir tampon selon la revendication 15, **caractérisé en ce que** grâce à l'élément de guidage d'écoulement (14, 15, 21a-d), l'écoulement central rapide à travers la chambre d'équilibrage (5) est guidé vers une zone dans laquelle sans élément de guidage d'écoulement (14, 15, 21a-d), l'écoulement est plus lent par rapport audit écoulement central.

17. Réservoir tampon selon la revendication 15 ou 16, **caractérisé en ce que** l'élément de guidage d'écoulement (14, 15, 21a-d) est disposé dans une zone de la chambre d'équilibrage (5) dans laquelle le passage à travers la chambre d'équilibrage (5) présente une forte courbure.

18. Réservoir tampon selon l'une des revendications précédentes, **caractérisé en ce que** la chambre d'équilibrage (5) présente une section transversale d'écoulement qui forme au moins un coin.

19. Réservoir tampon selon la revendication 18, **caractérisé en ce que** l'élément de guidage d'écoulement (14, 15, 21a-d) est disposé dans la zone du coin et grâce à cet élément de guidage d'écoulement (14, 15, 21a-d), l'écoulement angulaire qui se forme lors de la traversée de la chambre d'équilibrage (5) est égalisé.

20. Réservoir tampon selon l'une des revendications précédentes, **caractérisé en ce que** l'élément de guidage d'écoulement (14, 15, 21a-d) est disposé sur la paroi de la chambre d'équilibrage (5) opposée à l'ouverture d'entrée de polymère fondu (3) et/ou à l'ouverture de sortie de polymère fondu (4).

21. Réservoir tampon selon la revendication 20, **caractérisé en ce que** l'élément de guidage d'écoulement (14, 15) a essentiellement la forme d'une saillie dirigée dans la direction de l'ouverture d'entrée d'écoulement (3) et de préférence symétrique radialement.

22. Réservoir tampon selon la revendication 20 ou 21, **caractérisé en ce que** la saillie est disposée sur le piston (8).

23. Réservoir tampon selon l'une des revendications précédentes, **caractérisé en ce que** l'élément de guidage d'écoulement a sensiblement la forme d'une pale ou d'une aile.

24. Module composé d'une extrudeuse pour extruder un polymère fondu, d'au moins un dispositif de pompage pour amener le polymère fondu dans l'extrudeuse, et d'un réservoir tampon, **caractérisé en ce que** le réservoir tampon est conçu selon l'une des revendications précédentes.
